# EUROPEAN PATENT APPLICATION

(11) **EP 4 546 460 A1**
(43) Date of publication of application: **30.04.2025**
(21) Application number: 22948225.2
(22) Date of filing: 27.06.2022
(51) Int. Cl.: H01M 4/48, H01M 4/52, H01M 10/0525

(54) **SECONDARY BATTERY, BATTERY MODULE, BATTERY PACK, AND ELECTRICAL DEVICE**

(71) Applicant: CONTEMPORARY AMPEREX TECHNOLOGY (HONG KONG) LIMITED, Central (HK)
(72) Inventor: BIE, Changfeng, Ningde, Fujian 352100 (CN); ZHU, Chang, Ningde, Fujian 352100 (CN); LIU, Hongyu, Ningde, Fujian 352100 (CN); DONG, Miaomiao, Ningde, Fujian 352100 (CN); OUYANG, Shaocong, Ningde, Fujian 352100 (CN); NI, Huan, Ningde, Fujian 352100 (CN)
(74) Representative: Gong, Jinping
(86) International application number: PCT/CN2022/101487
(87) International publication number: WO 2024/000101

(57) **Abstract**

This application relates to a secondary battery. The secondary battery includes a positive electrode plate, a negative electrode plate, and an electrolyte solution. The positive electrode plate includes a positive current collector and a positive electrode film layer disposed on at least one surface of the positive current collector. The positive electrode film layer includes a positive active material. The positive active material includes: S1) a lithium-containing compound of an olivine structure, and S2) a vanadium oxide represented by a general formula j(M₂O)·kVOₓ, where M is one or more of alkali metals, 0 ≤ j ≤ 1, 1 ≤ k ≤ 5, 1 ≤ x ≤ 2.5, a difference of a discharge platform voltage between S1 and S2 is E, and 0.2 V ≤ E ≤ 2.8 V. The secondary battery exhibits excellent low-temperature performance while ensuring excellent cycle performance and gravimetric capacity, for example, maintains a very good low-temperature capacity retention rate even at a high discharge rate.

## Description

### TECHNICAL FIELD

This application relates to the technical field of lithium batteries, and in particular, to a secondary battery, a battery module, a battery pack, and an electrical device.

### BACKGROUND

In recent years, with the lithium-ion batteries being applied more and more widely, the requirements imposed by the market on the lithium-ion batteries are increasingly higher. In addition to a high energy density, the development and industrialization of high C-rate and low-temperature resistant batteries have attracted more and more attention from the industry. For example, such batteries need to be applied in the military field such as electromagnetic interference, electromagnetic rail launcher, magnetron, and other equipment, and in civilian fields such as vehicle-mounted cold start power supplies in low-temperature regions, high-power electric tools, and power supplies in a communication base station in extremely cold regions. The above application scenarios impose more stringent requirements on low-temperature performance and C-rate performance. A positive electrode material of the battery is a key factor to the electrochemical performance, safety performance, energy density, and the like of a battery system.

A phosphate-based positive electrode material of an olivine structure (LiMPO₄, where M may be one or more of Fe, Co, Zn, Ni, Cu, or Mn) is one of the positive electrode materials that are currently commercialized on a large scale, and can exert the gravimetric capacity to a high degree and possesses a high discharge voltage. In addition, this material is characterized by a stable output of the discharge voltage, cost-effective raw materials for synthesis, excellent longevity, and high safety performance, and has been massively used in power batteries and energy storage batteries.

Tests show that LiMPO₄ positive electrode materials are of very low electronic conductivity and ionic conductivity. Using a lithium iron phosphate material as an example, the disadvantage of LiFePO₄ lies in a low electronic conductivity and ionic conductivity, which are 10⁻⁹ S·cm1 and 10⁻¹⁰ to 10⁻¹⁵ cm2·s1, respectively. When used as a positive electrode material in a lithium-ion battery, the lithium iron phosphate material exhibits inferior C-rate performance and low-temperature discharge performance. Effective approaches currently used to improve the C-rate performance and low-temperature performance of the material are coating, doping, and the like, but these approaches still fail to achieve satisfactory electrochemical performance. Finding an appropriate low-temperature additive and adopting an appropriate compounding method are effective ways to improve the lithium iron phosphate positive electrode material.

### SUMMARY

This application is developed in view of the above subject-matter. An objective of this application is to provide a secondary battery. A positive electrode film layer of the secondary battery includes a vanadium oxide represented by a general formula j(M₂O)·kVOₓ, so that the secondary battery exhibits excellent low-temperature performance while ensuring excellent cycle performance and gravimetric capacity, for example, maintains a very good low-temperature capacity retention rate even at a high discharge rate.

A first aspect of this application provides a secondary battery. The secondary battery includes a positive electrode plate, a negative electrode plate, and an electrolyte solution. The positive electrode plate includes a positive current collector and a positive electrode film layer disposed on at least one surface of the positive current collector. The positive electrode film layer includes a positive active material. The positive active material includes: S1) a lithium-containing compound of an olivine structure, and S2) a vanadium oxide represented by a general formula j(M₂O)·kVOₓ, where M is one or more of alkali metals, 0 ≤ j ≤ 1, 1 ≤ k ≤ 5, 1 ≤ x ≤ 2.5, a difference of a discharge platform voltage between S1 and S2 is E, and 0.2 V ≤ E ≤ 2.8 V.

Therefore, by making the positive active material include two specific active materials of a specific discharge platform voltage, this application endows the secondary battery with excellent low-temperature performance while ensuring excellent cycle performance. For example, a very good low-temperature capacity retention rate is maintained even at a high discharge rate.

In any embodiment, in the constituent S2, M is one or both selected from Li or Na, and optionally is Li, 0 ≤ j/k ≤ 1, and preferably 0.2 ≤ j/k ≤ 0.6. In this way, the vanadium oxide is selected more preferably, thereby increasing the content of the active lithium or sodium in the low-temperature additive, and improving the exertion of the capacity of the secondary battery at low temperature while maintaining an excellent low-temperature capacity retention rate.

In any embodiment, S1 is a compound represented by a general formula LiA_{1-n×y/2}M_{y}PO₄, where 0 ≤ y ≤ 0.1.

In the formula above, A is at least one selected from Fe, Co, Ni, Cu, Mn, or Zn.

n is a valence state of the metal M, and n = +2, +3, +4, or +5.

M is at least one selected from Cr, Pb, Ca, Sr, Ti, Mg, V, Nb, or Zr.

A is identical to or different from M.

In this way, the above type of lithium phosphate-based positive active material is used together with the vanadium oxide, thereby further improving the low-temperature performance of the battery while ensuring good cycle performance.

In any embodiment, the constituent S1 is a compound represented by a general formula LiFe_{1-n×y/2}M_{y}PO₄, where y, M, and n are as defined above.

S2 includes: LiVO₃, Li₃V₂O₅, Li₄V₃O₈, LiV₃O₈, Li₂VO₃, LiVO₂; V₂O₅, V₂O₃, V₃O₄; and corresponding Na dopants of such constituents Li_{0.95}Na_{0.05}VO₃, Li_{2.95}Na_{0.05}V₂O₅, and Li_{3.95}Na_{0.05}V₃O₈. The above type of lithium phosphate-based positive active material is used together with the vanadium oxide, thereby further improving the low-temperature performance of the battery while ensuring good cycle performance.

In any embodiment, a mass percent of vanadium is 1 wt% to 5 wt%, based on a mass of the positive active material. In the positive active material, a molar ratio of vanadium to lithium is 1: (5 to 20), and preferably 1: (6 to 10). In this way, by controlling the mass percent of and the mass ratio between lithium and vanadium in the positive active material, this application further improves the low-temperature performance of the battery.

In any embodiment, a mass ratio of the constituent S1 to the constituent S2 is (3 to 30): 1, and preferably (4 to 10): 1. In this way, by controlling the mass ratio of the constituent S1 to the constituent S2 in the positive active material, this application further improves the low-temperature performance of the battery while ensuring good cycle performance of the battery.

In any embodiment, a discharge platform voltage of the constituent S1 is 3.1 V to 4.8 V, and a discharge platform voltage of the constituent S2 is 1.0 V to 3.0 V. In this way, by controlling the discharge platform voltages of the constituents S1 and S2 in the positive active material, this application further improves the low-temperature performance of the battery while ensuring good cycle performance of the battery.

**In** any embodiment, the constituent S2 is coated with carbon or a conductive polymer. In this way, by controlling the composition of the constituent S2 in the positive active material, this application further improves the low-temperature performance of the battery while ensuring good cycle performance of the battery.

A second aspect of this application further provides a battery module. The battery module includes the secondary battery according to the first aspect of this application.

A third aspect of this application provides a battery pack. The battery pack includes the battery module according to the second aspect of this application.

A fourth aspect of this application provides an electrical device. The electrical device includes at least one of the secondary battery according to the first aspect of this application, the battery module according to the second aspect of this application, or the battery pack according to the third aspect of this application.

**In** the secondary battery of this application, the positive active material includes a lithium-containing compound and a vanadium oxide, and the difference of the discharge platform voltage between the lithium-containing compound and the vanadium oxide is ensured to fall within a specified range. In this way, the secondary battery exhibits excellent low-temperature performance while ensuring excellent cycle performance. For example, a very good low-temperature capacity retention rate is maintained even at a high discharge rate. Moreover, the capacity of the battery at low temperature is better exerted.

### BRIEF DESCRIPTION OF DRAWINGS

FIG. 1 is a scanning electron microscope image of a positive active material according to an embodiment of this application;
FIG. 2 is an energy-dispersive X-ray spectrometer (EDS) image obtained by scanning a surface of a positive active material according to an embodiment of this application;
FIG. 3 is a schematic diagram of a secondary battery according to an embodiment of this application;
FIG. 4 is an exploded view of a secondary battery shown in FIG. 3 according to an embodiment of this application;
FIG. 5 is a schematic diagram of a battery module according to an embodiment of this application;
FIG. 6 is a schematic diagram of a battery pack according to an embodiment of this application;
FIG. 7 is an exploded view of a battery pack shown in FIG. 6 according to an embodiment of this application; and
FIG. 8 is a schematic diagram of an electrical device that uses a secondary battery as a power supply according to an embodiment of this application.

### List of reference numerals:

1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

The following describes and discloses in detail a positive active material and a preparation method thereof, a positive electrode plate, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

A phosphate-based positive electrode material of an olivine structure (LiMPO₄, where M may be one or more of Fe, Co, Zn, Ni, Cu, or Mn) is one of the positive electrode materials that are currently commercialized on a large scale, and can exert the gravimetric capacity to a high degree and possesses a high discharge voltage. In addition, this material is characterized by a stable output of the discharge voltage, cost-effective raw materials for synthesis, excellent longevity, and high safety performance, and has been massively used in power batteries and energy storage batteries.

Tests show that LiMPO₄ positive electrode materials are of very low electronic conductivity and ionic conductivity. Using a lithium iron phosphate material as an example, the disadvantage of LiFePO₄ lies in a low electronic conductivity and ionic conductivity, which are 10⁻⁹ S·cm1 and 10⁻¹⁰ to 10⁻¹⁵ cm2·s1, respectively. When used as a positive electrode material in a lithium-ion battery, the lithium iron phosphate material exhibits inferior C-rate performance and low-temperature discharge performance. Effective approaches currently used to improve the C-rate performance and low-temperature performance of the material are coating, doping, and the like, but these approaches still fail to achieve satisfactory electrochemical performance. Finding an appropriate low-temperature additive and adopting an appropriate compounding method are effective ways to improve the lithium iron phosphate positive electrode material. Through research, the applicant hereof finds that, in the secondary battery disclosed in the first aspect of this application, the positive active material includes a lithium-containing compound and a vanadium oxide, and the difference of the discharge platform voltage between the lithium-containing compound and the vanadium oxide is ensured to fall within a specified range. In this way, the secondary battery exhibits excellent low-temperature performance while ensuring excellent cycle performance and gravimetric capacity. For example, a very good low-temperature capacity retention rate is maintained even at a high discharge rate, and the battery exhibits excellent power performance at a low state of charge (SOC).

### Secondary battery

A first aspect of this application provides a secondary battery. The secondary battery includes a positive electrode plate, a negative electrode plate, and an electrolyte solution. The positive electrode plate includes a positive current collector and a positive electrode film layer disposed on at least one surface of the positive current collector. The positive electrode film layer includes a positive active material. The positive active material includes: S1) a lithium-containing compound of an olivine structure, and S2) a vanadium oxide represented by a general formula j(M₂O)·kVOₓ, where M is one or more of alkali metals, 0 ≤ j ≤ 1, 1 ≤ k ≤ 5, 1 ≤ x ≤ 2.5, a difference of a discharge platform voltage between S1 and S2 is E, and 0.2 V ≤ E ≤ 2.8 V.

Without being bound by any theory, it is currently believed that when the battery is discharged until a low state of charge (SOC), the discharge power of the battery fades sharply. This phenomenon is more obvious during low-temperature discharge. It is of vital importance to improve the discharge power of the battery under the condition of low-SOC discharge. In this application, the positive active material includes a lithium-containing compound and a vanadium oxide, and the difference of the discharge platform voltage between the lithium-containing compound and the vanadium oxide is ensured to fall within a specified range. At low temperature, the battery provides an energy output by virtue of the reaction of the vanadium oxide, the internal temperature of the battery cell can still operate effectively even at a higher temperature inside, and the discharge capacity of the battery cell is improved. In this way, the secondary battery exhibits excellent low-temperature performance while ensuring excellent cycle performance. For example, a very good low-temperature capacity retention rate is maintained even at a high discharge rate. Moreover, the capacity of the battery at low temperature is better exerted.

In some embodiments, in the constituent S2, M is one or both selected from Li or Na, and optionally is Li, 0 ≤ j/k ≤ 1, and preferably 0.2 ≤ j/k ≤ 0.6. In this way, the vanadium oxide is selected more preferably, thereby improving the exertion of the capacity of the secondary battery at low temperature while maintaining an excellent low-temperature capacity retention rate.

In some embodiments, S1 is a compound represented by a general formula LiA_{1-n×y/2}M_{y}PO₄, where 0 ≤ y ≤ 0.1.

In the formula above, A is at least one selected from Fe, Co, Ni, Cu, Mn, or Zn.

n is a valence state of the metal M, and n = +2, +3, +4, or +5.

M is at least one selected from Cr, Pb, Ca, Sr, Ti, Mg, V, Nb, or Zr.

A is identical to or different from M.

In this way, the above type of lithium phosphate-based positive active material is used together with the vanadium oxide, thereby further improving the low-temperature performance of the battery while ensuring good cycle performance.

In some embodiments, the constituent S1 is optionally a compound of LiFe_{1-n×y/2}M_{y}PO₄, where y, M, and n are as defined above, preferably 0 < y ≤ 0.1, and M and n are as defined above; more preferably, this constituent is LiFePO₄ or LiFe_{1-n×y/2}M_{y}PO₄; even more preferably this constituent is LiTiₓFe_{1-n×y/2-2x}Mn_{y}PO₄, LiTi_{y}Fe_{1-n×y/2}PO₄, LiMgₓFe_{1-n×y/2-x}Mn_{y}PO₄, or LiVₓFe_{1-n×y/2-5x/2}Mn_{y}PO₄, where y and n are as defined above, and 0.005 ≤ x ≤ 0.1; and most preferably, this constituent is LiFePO₄ or LiTi_{y}Fe_{1-n×y/2}PO₄, where y and n are as defined above.

In some embodiments, S2 is LiVO₃, Li₃V₂O₅, Li₄V₃O₈, LiV₃O₈, Li₂VO₃, Li₃VO₄, LiVO₂; V₂O₅, V₂O₃, V₃O₄; or a corresponding sodium dopant of the foregoing constituents, such as Li₃₋ₓNaₓVO₄, Li₁₋ₓNaₓV₃O₈, and Li₁₋ₓNaₓVO₃, where 0.005 ≤ x ≤ 0.1, preferably Li₃VO₄, V₂O₅, LiV₃O₈, LiVO₃, or a sodium dopant thereof such as Li_{0.95}Na_{0.05}VO₃, Li_{2.95}Na_{0.05}V₂O₅, or Li_{3.95}Na_{0.05}V₃O₈. Due to the wide variety of vanadate forms that vanadium and oxygen can form, such as orthovanadate, metavanadate, pyrovanadate, and polyvanadate, the constituent S2 is not limited to the above compounds. In this way, the above type of lithium phosphate-based positive active material is used together with the vanadium oxide, thereby further improving the low-temperature performance of the battery while ensuring good cycle performance.

In some embodiments, the mass percent of vanadium is 1 wt% to 5 wt%, and preferably 2 wt% to 4 wt%, based on the mass of the positive active material. In the positive active material, the molar ratio of lithium to vanadium (5 to 20): 1, and preferably (6 to 10): 1. In this way, by controlling the mass percent of and the mass ratio between lithium and vanadium in the positive active material, this application further improves the low-temperature performance of the battery.

**In** some embodiments, the mass ratio of the constituent S1 to the constituent S2 is (3 to 20): 1, and preferably (4 to 10): 1. In this way, by controlling the mass ratio of the constituent S1 to the constituent S2 in the positive active material, this application further improves the low-temperature performance of the battery while ensuring good cycle performance of the battery.

**In** some embodiments, a discharge platform voltage of the constituent S1 is 3.1 Vto 4.8 V, and a discharge platform voltage of the constituent S2 is 1.0 V to 3.0 V. In this way, by controlling the discharge platform voltages of the constituents S1 and S2 in the positive active material, this application further improves the low-temperature performance of the battery while ensuring good cycle performance of the battery. If the constituent S1 or S2 possesses a plurality of discharge platform voltages, the discharge platform voltage of the S1 or S2 in the present invention is the highest discharge platform voltage of the constituent.

**In** some embodiments, the constituent S2 is coated with carbon or a conductive polymer. In this way, by controlling the composition of the constituent S2 in the positive active material, this application further improves the low-temperature performance of the battery while ensuring good cycle performance of the battery. In some embodiments, the surface-modified carbon or conductive polymer may be one or more selected from amorphous carbon, graphene, graphitized carbon layer, polyacetylene, polypyrrole, polythiophene, polyphenylene, polyphenylacetylene, polyaniline, polydopamine, or the like.

In some embodiments, a volume median diameter Dᵥ₅₀ of the constituent S1 is 1 to 5 µm. The volume median diameter Dᵥ₅₀ is a particle diameter corresponding to a 50% cumulative volume distribution percent in a volume-based particle size distribution curve of the specimen, and is determined by using a laser particle size analyzer such as a Mastersizer 3000 laser particle size analyzer manufactured by Malvern Instruments Ltd., UK.

In some embodiments, the positive active material may be prepared by a method known in the art. An exemplary preparation method is: physically mixing the constituent S1 and the constituent S2 to obtain a positive active material, or coating or doping the surface of the constituent S2 with the constituent S2 to obtain a positive active material.

**In** some embodiments, when the surface of the constituent S2 is coated or doped with the constituent S2, the positive active material is generally prepared by the following process:

Mixing a lithium source, an A metal source, a phosphorus source, and an M metal source at a specified molar ratio to form a mixture, adding a carbon source and an additive into the mixture, grinding the mixture to form a uniform mixture slurry, and spray-drying the resulting slurry to obtain a precursor. Sintering the precursor in an inert atmosphere to obtain a carbon-coated S1 material, mixing the obtained S1 material with optionally a lithium source or a metal vanadium source at a specified ratio, adding a specified amount of carbon source, and continuing to sinter the mixture in an inert atmosphere to obtain the positive active material of this application.

**In** the mixture, in the lithium source, the A metal source, the phosphorus source, and the M metal source are mixed at a molar ratio of Li: A: P: M = (0.95 to 1): (0.95 to 1): (0.95 to 1): (0 to 0.05).

The lithium source is one or more of lithium oxide, lithium hydroxide, lithium acetate, lithium carbonate, lithium nitrate, lithium nitrite, lithium phosphate, lithium dihydrogen phosphate, lithium oxalate, lithium chloride, lithium molybdate, or lithium vanadate.

The A metal source includes an iron source, a copper source, a cobalt source, a nickel source, a zinc source, or a manganese source; and preferably includes an iron source and a manganese source, such as one or more of iron (manganese) phosphate, lithium ferrous (manganese) phosphate, ferrous (manganese) pyrophosphate, ferrous (manganese) carbonate, ferrous (manganese) chloride, ferrous (manganese) hydroxide, ferrous (manganese) nitrate, ferrous (manganese) oxalate, iron (manganese) chloride, iron (manganese) hydroxide, iron (manganese) nitrate, iron (manganese) citrate, or iron (manganese) oxide.

The phosphorus source is one or more of phosphoric acid, diammonium hydrogen phosphate, ammonium dihydrogen phosphate, iron phosphate, or lithium dihydrogen phosphate.

The M metal source further includes a compound of copper, vanadium, magnesium, aluminum, zinc, manganese, titanium, zirconium, niobium, or chromium, or a rare earth element compound, or a combination of one or more thereof.

The carbon source is one or more of citric acid, malic acid, tartaric acid, oxalic acid, salicylic acid, succinic acid, glycine, ethylenediaminetetraacetic acid, sucrose, or glucose.

The solvent is one or more of water, methanol, ethanol, propanol, isopropanol, n-butanol, isobutanol, n-pentanol, n-hexanol, n-heptanol, acetone, butanone, diacetyl, pentanone, cyclopentanone, hexanone, cyclohexanone, or cycloheptanone.

The additive is one or more of polyvinyl alcohol, polyethylene glycol, polyethylene oxide, sodium polystyrene sulfonate, polyoxyethylene nonylphenyl ether, hexadecyltrimethylammonium chloride, hexadecyltrimethylammonium bromide, octadecyltrimethylammonium chloride, or octadecyltrimethylammonium bromide.

The metal vanadium source is one or more of vanadium pentoxide, vanadium dioxide, vanadium metal powder, vanadium chloride, or ammonium metavanadate.

Next, a secondary battery of this application is described below with due reference to drawings.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### Positive electrode plate

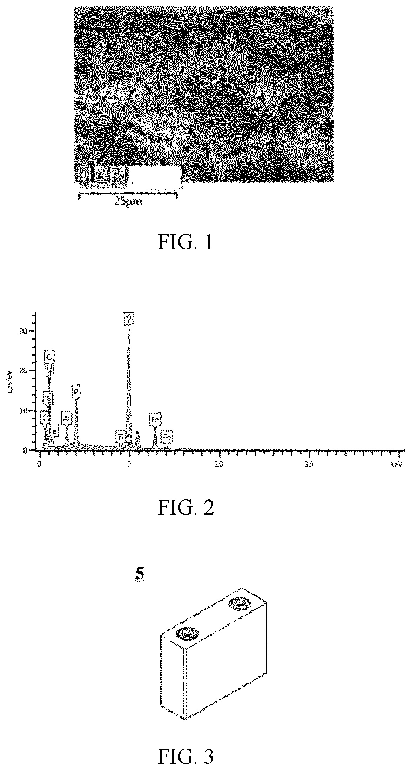

The positive electrode plate includes a positive current collector and a positive electrode film layer that overlays at least one surface of the positive current collector. The positive electrode film layer includes a positive active material according to the first aspect of this application. FIG. 1 is an SEM image of a cross-section of an electrode plate containing a positive active material of the present invention; and FIG. 2 is an EDS image obtained by scanning a surface of an electrode plate containing a positive active material of the present invention to characterize the distribution of phosphorus, vanadium, and oxygen elements.

As an example, the positive current collector includes two surfaces opposite to each other in a thickness direction of the positive current collector. The positive electrode film layer is disposed on either or both of the two opposite surfaces of the positive current collector.

In some embodiments, the positive current collector may be a metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

**In** some embodiments, the positive active material may further include another positive active material well-known in the art for use in a battery. As an example, the other positive active material may further include at least one of the following materials: olivine-structured lithium-containing phosphate, lithium transition metal oxide, and a modified compound thereof. The positive active material is not limited to such materials, but may be another conventional material usable as a positive active material in a battery. One of such other positive active materials may be used alone, or at least two thereof may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon. A mass percent of the positive active material in the positive electrode film layer is 80 wt% to 100 wt% based on the total mass of the positive electrode film layer.

In some embodiments, the positive electrode film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin. A mass percent of the binder in the positive electrode film layer is 0 wt% to 20 wt% based on the total mass of the positive electrode film layer.

In some embodiments, the positive electrode film layer further optionally includes a conductive agent. As an example, the conductive agent may include at least one of superconductive carbon, acetylene black, carbon black, Ketjen black, carbon dots, carbon nanotubes, graphene, or carbon nanofibers. A mass percent of the conductive agent in the positive electrode film layer is 0 wt% to 20 wt% based on the total mass of the positive electrode film layer.

In some embodiments, the positive electrode plate may be prepared by the following method: dispersing the constituents of the positive electrode plate such as the positive active material, the conductive agent, the binder, and any other constituents into a solvent (such as N-methyl-pyrrolidone) to form a positive electrode slurry in which the solid content is 40 wt% to 80 wt%; adjusting the viscosity of the slurry at room temperature to 5000 to 25000 mPa·s, and coating a surface of the positive current collector with the positive electrode slurry; oven-drying the slurry, cold-pressing the current collector with a cold-pressing machine to form a positive electrode plate, where a coating areal density of the positive electrode powder per unit area is 150 to 350 mg/m², and the compaction density of the positive electrode plate is 1 to 5 g/cm³, and preferably 2.0 to 2.6 g/cm³.

### Negative electrode plate

The negative electrode plate includes a negative current collector and a negative electrode film layer disposed on at least one surface of the negative current collector. The negative electrode film layer includes a negative active material.

As an example, the negative current collector includes two surfaces opposite to each other in a thickness direction of the negative current collector. The negative electrode film layer is disposed on either or both of the two opposite surfaces of the negative current collector.

In some embodiments, the negative current collector may be a metal foil or a composite current collector. For example, the metal foil may be copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well-known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination. The mass percent of the negative active material in the negative electrode film layer is 80 wt% to 100 wt% based on the total mass of the negative electrode film layer.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS). The mass percent of the binder in the negative electrode film layer is 0 wt% to 20 wt% based on the total mass of the negative electrode film layer.

In some embodiments, the negative electrode film layer further optionally includes a conductive agent. The conductive agent may be at least one selected from superconductive carbon, acetylene black, carbon black, Ketjen black, carbon dots, carbon nanotubes, graphene, or carbon nanofibers. The mass percent of the conductive agent in the negative electrode film layer is 0 wt% to 20 wt% based on the total mass of the negative electrode film layer.

In some embodiments, the negative electrode film layer further optionally includes other agents, such as a thickener (for example, sodium carboxymethyl cellulose (CMC-Na)). The mass percent of other agents in the negative electrode film layer is 0 wt% to 15 wt% based on the total mass of the negative electrode film layer.

In some embodiments, the negative electrode plate may be prepared by the following method: dispersing the constituents of the negative electrode plate such as the negative active material, the conductive agent, and the binder and any other constituents into a solvent (such as deionized water) to form a negative electrode slurry in which the solid content is 30 wt% to 70 wt%, adjusting the viscosity of the slurry at room temperature to 2000 to 10000 mPa·s; coating a negative current collector with the resulting negative electrode slurry, and performing steps such as drying and cold pressing such as calendering to obtain a negative electrode plate. The coating areal density of the negative electrode powder per unit area is 75 to 220 mg/m², and the compaction density of the negative electrode plate is 1.2 to 2.0 g/m³.

### Electrolyte

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes an electrolyte salt and a solvent.

In some embodiments, the electrolyte salt may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato)borate (LiBOB), lithium difluorophosphate (LiPO₂F₂), lithium difluoro(bisoxalato)phosphate (LiDFOP), or lithium tetrafluoro(oxalato)phosphate (LiTFOP). The concentration of the electrolyte salt is typically 0.5 to 5 mol/L.

In some embodiments, the solvent may be one or more selected from fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE).

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

### Separator

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the thickness of the separator is 6 to 40 µm, and optionally 12 to 20 µm.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

The shape of the secondary battery is not particularly limited in this application, and may be cylindrical, prismatic or any other shape. FIG. 3 shows a prismatic secondary battery 5 as an example.

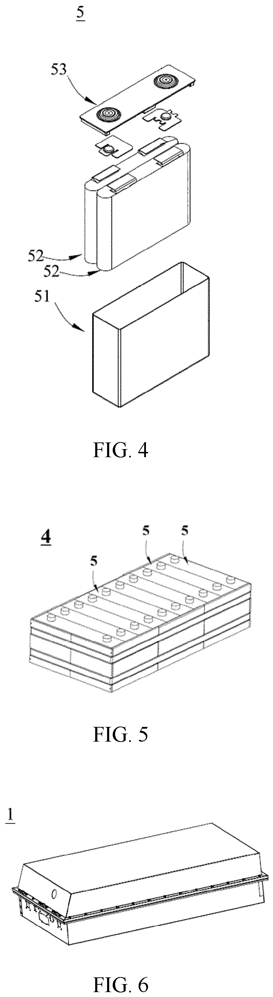

In some embodiments, referring to FIG. 4, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is created on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 5 shows a battery module 4 as an example. Referring to FIG. 5, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

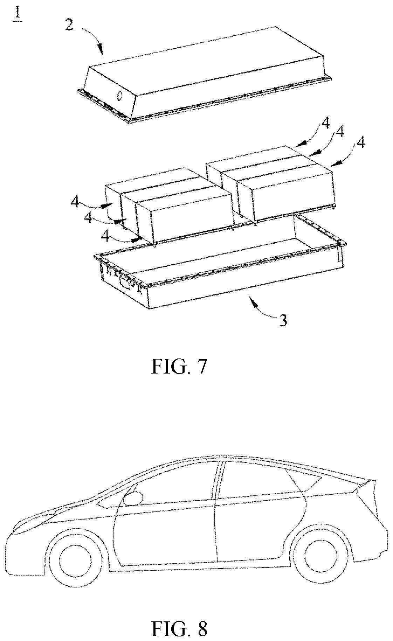

FIG. 6 and FIG. 7 show a battery pack 1 as an example. Referring to FIG. 6 and FIG. 7, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 8 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

To clarify the technical problems to be solved by this application, technical solutions, and beneficial effects of this application more clearly, the following describes this application in further detail with reference to embodiments and drawings. Evidently, the described embodiments are merely a part of but not all of the embodiments of this application. The following description of at least one exemplary embodiment is merely illustrative, and is in no way intended as a limitation on this application or the use thereof. All other embodiments derived by a person of ordinary skill in the art based on the embodiments of this application without making any creative efforts still fall within the protection scope of this application.

Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### I. Preparation embodiments

### Preparation embodiment 1

(1) Mixing lithium carbonate, ferrous oxalate, ammonium dihydrogen phosphate, and titanium dioxide at a molar ratio of 1: 2: 2: 0.01 at room temperature to form a mixture. Adding glucose, PEG, and citric acid surfactants into the mixture at a mass ratio of 3: 1: 0.3, where the glucose accounts for 10% of the mass of the total raw materials, and the citric acid accounts for 1% of the mass of the total raw materials. Adding 1000 mL of water as a dispersion medium. Subsequently, grinding the mixture at a speed of 1000 rpm by use of a sand mill for 4 hours to form a uniform mixture slurry in which the solid content is 40%. Spray-drying the resultant slurry by use of a spray-drying device to obtain a precursor of the constituent S1.
(2) Sintering the precursor of the constituent S1 in an inert atmosphere of nitrogen (with oxygen controlled within 20 ppm), increasing the temperature at a uniform speed of 10 °C/min until 760 °C, keeping the temperature for 10 hours, and then passing cold nitrogen in for 5 hours to cool the material until the surface temperature of the material reaches 40 °C. Performing jet milling for the sintered material to obtain a constituent S1 represented by the molecular formula LiTi_{0.005}Fe_{0.99}PO₄, with a volume median diameter Dᵥ₅₀ being 1.5 µm.
(3) Further mixing the constituent S1 material with lithium carbonate, ammonium metavanadate, and glucose as a carbon source. Based on the total mass of the mixture, the mass percent of the constituent S1 is 80%, the mass percent of lithium carbonate and ammonium metavanadate is 15%, the mass percent of the glucose as carbon source is 5%, and the molar ratio of lithium carbonate to ammonium metavanadate is 1.5: 1.
(4) Ball-milling the mixture in a ball mill for 2 hours. Subsequently, sintering the mixture in a nitrogen protection atmosphere, increasing the temperature at a uniform speed of 10 °C/min until 560 °C, keeping the temperature for 10 hours, and then passing cold nitrogen in for 5 hours to cool the material until the surface temperature of the material reaches 40 °C. The entire sintering process is protected by a nitrogen atmosphere, and the oxygen in the atmosphere is controlled within 20 ppm. Finally, obtaining a positive active material of the present invention, where the surface of the positive active material is coated with 1.5 Li₂O·VO_{2.5}, and the volume median diameter Dᵥ₅₀ of the material is 1.8 µm.

### Preparation embodiments 2 to 12

The preparation method of the positive active material is similar to that of the positive active material in Preparation Embodiment 1, but the constituents of the feedstock and the product parameters are adjusted. The different product parameters are detailed in Table 1.

### Preparation embodiment 13

Preparing a constituent S1 according to steps (1) and (2) in the method for preparing the positive active material of Embodiment 1;

Mixing lithium carbonate, ammonium metavanadate, and glucose as a carbon source. Based on the total mass of the mixture, the mass percent of lithium carbonate and ammonium metavanadate is 75%, the mass percent of the glucose as carbon source is 25%, and the molar ratio of lithium carbonate to ammonium metavanadate is 1.5: 1. Ball-milling the mixture in a ball mill for 2 hours. Subsequently, sintering the mixture in a nitrogen protection atmosphere, increasing the temperature at a uniform speed of 10 °C/min until 560 °C, keeping the temperature for 10 hours, and then passing cold nitrogen in for 5 hours to cool the material until the surface temperature of the material reaches 40 °C, so as to obtain a constituent S2. The entire sintering process is protected by a nitrogen atmosphere, and the oxygen in the atmosphere is controlled within 20 ppm. Mixing the resultant constituents S1 and S2 physically at a mass ratio of 8: 1 to obtain the positive active material of the present invention. The different product parameters are detailed in Table 1.

### Preparation Comparative Embodiment 1

Performing only steps (1) and (2) in the Preparation Embodiment 1 to obtain a constituent S1 as a positive active material. The different product parameters are detailed in Table 1.

**Table 1 Constituents and relevant parameters of the positive active materials obtained in different preparation embodiments and preparation comparative embodiments**

| Serial No. | Constituent S1 | Constituent S2 | Mixing method | Mass ratio of S1 to S2 | Mass percent of V (wt%) | Molar ratio of V to Li | Compaction density (g/cm³) |
|---|---|---|---|---|---|---|---|
| 1 | LiTi_{0.005}Fe_{0.99}PO₄ | 1.5Li₂O·VO_{2.5} | Coating S1 with S2 | 3:1 | 10.6% | 1: 5.29 | 2.35 |
| 2 | LiTi_{0.005}Fe_{0.99}PO₄ | 1.5Li₂O·VO_{2.5} | Coating S1 with S2 | 5:1 | 7.08% | 1: 6.80 | 2.35 |
| 3 | LiTi_{0.005}Fe_{0.99}PO₄ | 1.5Li₂O·VO_{2.5} | Coating S1 with S2 | 8:1 | 4.7% | 1: 9.09 | 2.35 |
| 4 | LiTi_{0.005}Fe_{0.99}PO₄ | 1.5Li₂O·VO_{2.5} | Coating S1 with S2 | 10:1 | 3.8% | 1: 10.64 | 2.35 |
| 5 | LiTi_{0.005}Fe_{0.99}PO₄ | 1.5Li₂O·VO_{2.5} | Coating S1 with S2 | 14:1 | 2.8% | 1: 13.70 | 2.35 |
| 6 | LiTi_{0.005}Fe_{0.99}PO₄ | 1.5Li₂O·VO_{2.5} | Coating S1 with S2 | 20:1 | 2% | 1: 18.52 | 2.35 |
| 7 | LiTi_{0.005}Fe_{0.99}PO₄ | 1.5Li₂O·VO_{2.5} | Coating S1 with S2 | 30:1 | 1.37% | 1: 26.32 | 2.35 |
| 8 | LiTi_{0.005}Fe_{0.99}PO₄ | 0.5Li₂O·3VO_{2.5} | Coating S1 with S2 | 5: 1 | 8.8% | 1: 3.98 | 2.35 |
| 9 | LiTi_{0.005}Fe_{0.99}PO₄ | 0.5Li₂O·3VO_{2.5} | Coating S1 with S2 | 9:1 | 5.3% | 1: 5.81 | 2.35 |
| 10 | LiTi_{0.005}Fe_{0.99}PO₄ | 0.5Li₂O·3VO_{2.5} | Coating S1 with S2 | 14:1 | 3.5% | 1: 8.85 | 2.35 |
| 11 | LiTi_{0.005}Fe_{0.99}PO₄ | 0.5Li₂O·3VO_{2.5} | Coating S1 with S2 | 30:1 | 1.7% | 1: 18.52 | 2.35 |
| 12 | LiTi_{0.005}Fe_{0.99}PO₄ | 1.45Li₂O·0.05N a₂O·VO_{2.5} | Coating S1 with S2 | 8:1 | 4.6% | 1: 8.85 | 2.35 |
| 13 | LiTi_{0.005}Fe_{0.99}PO₄ | 1.5Li₂O·VO_{2.5} | Physically mixing S1 and S2 | 8:1 | 4.7% | 1: 9.09 | 2.35 |
| Comp arativ e Embo dimen t 1 | LiTi_{0.005}Fe_{0.99}PO₄ | NA | | NA | 0 | 0 | 2.35 |

### II. Application embodiments

### Embodiment 1

### 1) Preparing a positive electrode plate

Dry-mixing the positive active material powder of Preparation Embodiment 1, a conductive agent, and a binder at a mass ratio of 96: 2: 2, and adding an NMP solvent. Stirring the mixture vigorously with a vacuum mixer until a uniform positive electrode slurry is formed, in which the solid content is 60 wt%. Adjusting the viscosity of the slurry at a room temperature to 8000 Pa·s, and coating the surface of a positive current collector aluminum foil with the positive electrode slurry. Oven-drying the slurry, cold-pressing the current collector with a cold-pressing machine to form a positive electrode plate, where a coating areal density of the positive electrode powder per unit area is controlled to be 200 mg/mm², and the compaction density of the positive electrode plate is shown in Table 1.

### 2) Preparing a negative electrode plate

Mixing graphite as a negative active material, sodium carboxymethyl cellulose (CMC-Na) as a thickener, and styrene-butadiene rubber (SBR) as a binder, and carbon black as a conductive agent at a mass ratio of 97: 1: 1: 1, adding deionized water, and stirring well to obtain a negative electrode slurry, in which the solid content is 50 wt%. Adjusting the viscosity of the slurry at a room temperature to 4000 mPa·s, and coating a copper foil with the resulting negative electrode slurry. Drying the slurry, and calendering the foil to obtain a negative electrode plate. The coating areal density of the negative electrode powder per unit area is controlled to be 145 mg/m², and the compaction density of the negative electrode plate is controlled to be 1.35 g/m³.

### 3) Separator

Using a 0.012 mm-thick polyethylene film as a separator.

### 4) Preparing an electrolyte solution

Mixing ethylene carbonate (EC), ethyl methyl carbonate (EMC), and diethyl carbonate (DEC) at a volume ratio of 1: 1: 1 to obtain an organic solvent, and then dissolving a well-dried lithium salt LiPF₆ in the mixed organic solvent to obtain an electrolyte solution in which the concentration of LiPF₆ is 1 mol/L.

### 5) Preparing a battery

Stacking the above-prepared positive electrode plate, separator, and negative electrode plate sequentially so that the separator is located between the positive electrode plate and the negative electrode plate for a purpose of separation, and then winding the stacked structure to obtain an bare cell with a capacity of 3 Ah. Placing the bare cell in an outer packaging shell, drying the bare cell and then injecting 10 g of electrolyte solution. Performing steps such as vacuum packaging, static standing, chemical formation, and shaping to obtain a lithium-ion battery.

The secondary batteries in Embodiments 2 to 13 and the secondary battery in Comparative Embodiment 1 are prepared by a method similar to the preparation method of the secondary battery in Embodiment 1 but the positive active material obtained in the corresponding preparation embodiment is used instead.

### III. Performance test of the battery

### 1. Testing the -20 °C low-temperature performance

Charging a battery at a constant current of 0.5C at 25 °C until the voltage reaches 3.65 V, and then charging the battery at a constant voltage of 3.65 V until the current drops to 0.025C. Subsequently, leaving the battery to stand for 2 hours, and then discharging the battery at a constant current of 1C until the voltage drops to 2.0 V, and recording the discharge capacity at this time as C₀. Subsequently, leaving the battery to stand at 25 °C for 2 hours, and repeating the steps of charging the battery until a voltage of 3.65 V at a constant current of 0.5C and then charging the battery at a constant voltage until a current of 0.025C. Leaving the battery to stand at -20 °C for 2 hours, and then discharging the battery at a constant current of 1C until a voltage of 2.0 V, and recording the discharge capacity at this time as D₁. Subsequently, leaving the battery to stand at 25 °C for 2 hours, and repeating the steps of charging the battery at a constant current of 0.5C until a voltage of 3.65 V and then charging the battery at a constant voltage until a current of 0.025C. Leaving the battery to stand at -20 °C for 2 hours, and then discharging the battery at a constant current of 3C until a voltage of 2.0 V, and recording the discharge capacity at this time as D₃. Calculating the capacity retention rates of the battery cell discharged at -20 °C and at a rate of 1C and 3C as D₁/D₀ and D₃/D₀ respectively.

### 2. Testing the cycle performance

Letting a battery to undergo the following steps at 25 °C: 1. first, charging the battery at a constant current of 0.5C until a voltage of 3.65 V; 2. further, charging the battery at a constant voltage of 3.65 V until a current of 0.025C, and recording the capacity at this time as a 1^{st}-cycle charge capacity; 3. leaving the battery to stand for 2 hours; 4. subsequently, discharging the battery at a constant current of 1C until a voltage of 2.0 V, and recording the discharge capacity at this time as a 1^{st}-cycle discharge capacity; 5. subsequently, leaving the battery to stand at 25 °C for 2 hours. Repeating steps 1 to 4, recording the charge capacity and discharge capacity in each cycle. The capacity retention rate of the battery at the end of the n^{th} cycle is the 500^{th}-cycle discharge capacity divided by the first-cycle discharge capacity.

### 3. Testing the gravimetric capacity of the battery discharged at 0.5C

Charging, at 25 °C, a battery at a constant current of 0.5C until a voltage of 3.65 V, and then charging the battery at a constant voltage of 3.65 V until a current of 0.025C, leaving the battery to stand for 2 hours, and then discharging the battery at a constant current of 0.5C until a voltage of 2.0 V, and recording the discharge capacity at this time as C_{discharge}. Calculating the gravimetric capacity as: gravimetric capacity c = C_{discharge}/mass of the positive electrode material.

### IV. Test results of embodiments and comparative embodiments

The batteries described in the embodiments and the comparative embodiments are prepared according to the foregoing methods respectively, and performance parameters of the batteries are measured. The test results are shown in Table 2 below.

**Table 2 Performance of batteries in each embodiment and comparative embodiment**

| Serial number | Capacity retention rate at -20 °C | | Capacity retention rate of battery cycled at normal temperature for 500 cycles | 0.5C gravimetric discharge capacity c (mAh/g) |
|---|---|---|---|---|
| | 1C | 3C | | |
| 1 | 75% | 65% | 75% | 215 |
| 2 | 83% | 75% | 78% | 195 |
| 3 | 93% | 82% | 88% | 165 |
| 4 | 84% | 75% | 93% | 152 |
| 5 | 81% | 72% | 94% | 150 |
| 6 | 76% | 70% | 94.5% | 148 |
| 7 | 74% | 65% | 95% | 146 |
| 8 | 88% | 80% | 78% | 130 |
| 9 | 98% | 82% | 89% | 135 |
| 10 | 85% | 76% | 92% | 138 |
| 11 | 75% | 68% | 95% | 142 |
| 12 | 95% | 85% | 92% | 168 |
| 13 | 94 | 83% | 95% | 166 |
| Comparative Embodiment 1 | 70% | 62% | 96% | 144 |

As can be seen from Embodiments 1 to 7, by coating the surface of LiTi_{0.005}Fe_{0.99}PO₄ to form a 1.5Li₂O·VO_{2.5} coating layer, this application can improve the low-temperature performance of the mixed positive electrode material, and make the low-temperature performance significantly higher than that in Comparative Embodiment 1. On the other hand, with the increase of the mass percent of the lithium vanadium oxide, the cycle life of the battery cell decreases. A main reason is that, during delithiation and lithiation of the lithium vanadium oxide, a plurality of valence states of vanadium need to be transformed. The structural fading speed of the lithium vanadium oxide is higher than that of the lithium iron phosphate material. Further data analysis shows that, when the mass percent of 1.5Li₂O·VO_{2.5} is appropriate, the mixed positive electrode material exhibits the optimal low-temperature discharge performance. Evidently, under the conditions of Embodiment 3, the overall performance of the battery is optimal.

In addition, the lithium vanadium oxide plays the role in supplementing lithium for the positive electrode, and significantly improves the exertion of the gravimetric capacity of the battery. Further, in Embodiment 12, the constituents of the 1.5Li₂O·VO_{2.5} compound are doped with sodium ions to obtain 1.45Li₂O·0.05Na₂O·VO_{2.5}, thereby further improving the overall performance of the battery. That is because Na and Li are elements of the same group, and the radius of sodium ions (0.1 nm) is larger than the radius of lithium ions (0.7 nm). The appropriate amount of Na⁺ replacing Li⁺ can widen the interlayer spacing of material, provide more space for lithium ion diffusion in the bulk phase of the material, reduce the diffusion resistance, and improve the C-rate performance and low-temperature performance of the material.

In Embodiment 8 to 11, 0.5Li₂O·3VO_{2.5} low-temperature additive is employed, in which the value of j is lower than that in Embodiments 1 to 7. Therefore, the gravimetric capacity of the battery is less exerted, and the low-temperature performance of the battery is improved to a higher degree accordingly. That is because the mass percent of vanadium-oxygen matrix in the lithium vanadium oxide increases, and the resistance in the lithium ion transmission process is reduced, thereby producing a significant effect in improving the low-temperature performance. In Embodiments 8 to 11, with the increase in the mass percent of the 0.5Li₂O·3VO_{2.5} low-temperature additive, the change in performance is similar to that in Embodiments 1 to 7.

Compared with Embodiment 3, Embodiment 12 changes the mixing method of the low-temperature additive and the main material, and adopts a pure physical mixing method. The specific mixing method is: synthesizing S1 and S2 separately, and then mixing S1 and S2 together with other additives of the positive electrode formula to obtain a positive electrode plate. The test results show that Embodiment 12 also exhibits a high degree of improving the low-temperature performance.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A secondary battery, comprising a positive electrode plate, a negative electrode plate, and an electrolyte solution, wherein the positive electrode plate comprises a positive current collector and a positive electrode film layer disposed on at least one surface of the positive current collector, the positive electrode film layer comprises a positive active material, and the positive active material comprises: S1) a lithium-containing compound of an olivine structure, and S2) a vanadium oxide represented by a general formula j(M₂O)·kVOₓ, wherein M is one or more of alkali metals, 0 ≤ j ≤ 1, 1 ≤ k ≤ 5, 1 ≤ x ≤ 2.5, a difference of a discharge platform voltage between S1 and S2 is E, and 0.2 V ≤ E ≤ 2.8 V.

2. The secondary battery according to claim 1, **characterized in that** in the constituent S2, M is one or both selected from Li or Na, and optionally is Li, 0 ≤ j/k ≤ 1, and preferably 0.2 ≤ j/k ≤ 0.6.

3. The secondary battery according to claim 1 or 2, **characterized in that** S1 is a compound represented by a general formula LiA_{1-n×y/2}M_{y}PO₄, wherein 0 ≤ y ≤ 0.1, wherein
A is at least one selected from Fe, Co, Ni, Cu, Mn, or Zn,
n is a valence state of the metal M, and n = +2, +3, +4, or +5;
M is at least one selected from Cr, Pb, Ca, Sr, Ti, Mg, V, Nb, or Zr; and
A is identical to or different from M.

4. The secondary battery according to any one of claims 1 to 3, **characterized in that** the constituent S1 is optionally a compound of LiFe_{1-n×y/2}M_{y}PO₄, wherein n, y, and M are defined in claim 3; and
S2 comprises: LiVO₃, Li₃V₂O₅, Li₄V₃O₈, LiV₃O₈, Li₂VO₃, LiVO₂; V₂O₅, V₂O₃, V₃O₄; and corresponding Na dopants of such constituents Li_{0.95}Na_{0.05}VO₃, Li_{2.95}Na_{0.05}V₂O₅, and Li_{3.95}Na_{0.05}V₃O₈.

5. The secondary battery according to any one of claims 1 to 4, **characterized in that** a mass percent of vanadium is 1 wt% to 5 wt%, based on a mass of the positive active material; and, in the positive active material, a molar ratio of vanadium to lithium is 1: (5 to 20), and preferably 1: (6 to 10).

6. The secondary battery according to any one of claims 1 to 5, **characterized in that** a mass ratio of the constituent S1 to the constituent S2 is (3 to 20): 1, and preferably (4 to 10): 1.

7. The secondary battery according to any one of claims 1 to 6, **characterized in that** a discharge platform voltage of the constituent S1 is 3.1 V to 4.8 V, and a discharge platform voltage of the constituent S2 is 1.0 V to 3.0 V.

8. The secondary battery according to any one of claims 1 to 7, **characterized in that** the constituent S2 is coated with carbon or a conductive polymer.

9. A battery module, **characterized in that** the battery module comprises the secondary battery according to any one of claims 1 to 8.

10. A battery pack, **characterized in that** the battery pack comprises the battery module according to claim 9.

11. An electrical device, **characterized in that** the electrical device comprises at least one of the secondary battery according to any one of claims 1 to 8, the battery module according to claim 9, or the battery pack according to claim 10.
